# EUROPÄISCHE PATENTSCHRIFT

(11) **EP 0 939 705 B1**
(45) Veröffentlichungstag und Bekanntmachung des Hinweises auf die Patenterteilung: **12.02.2003**
(21) Anmeldenummer: 97951803.2
(22) Anmeldetag: 21.11.1997
(51) Int. Cl.: B60N 2/02

(54) **Fahrzeugsitz mit einer Steuervorrichtung**
Vehicle seat with a control device
Siège de véhicule automobile doté d'un dispositif de commande

(30) Priorität: 21.11.1996 DE 19648268
(43) Veröffentlichungstag der Anmeldung: 08.09.1999
(73) Patentinhaber: SIEMENS AKTIENGESELLSCHAFT, 80333 München (DE)
(72) Erfinder: POPP, Peter, D-93049 Regensburg (DE); HEITZER, Günter, D-93102 Pfatter (DE); LENNINGER, Ralf-Johannes, D-93093 Donaustauf (DE)
(86) Internationale Anmeldenummer: DE9702741
(87) Internationale Veröffentlichungsnummer: WO98022305

(56) Entgegenhaltungen:
- EP-A- 0 030 925
- EP-A- 0 448 829
- DE-A- 4 222 595
- DE-A- 4 339 113
- GB-A- 2 060 944
- GB-A- 2 212 629
- US-A- 5 019 759

## Beschreibung

Die Erfindung betrifft einen Fahrzeugsitz mit einer Steuervorrichtung.

Aus DE 43 39 113 A1 ist eine Sitzbelegungserkennung bekannt, die über ein Bus-System mit Sitzfunktionen, sitzzugeordneten Sicherheitsfunktionen, sitzzugeordnete Komfortfunktionen und anderen Zusatzfunktionen kommuniziert. Die Umgebung eines Sitzplatzes wird automatisch in Abhängigkeit von der Sitzbelegung angepasst.

Die Anzahl von elektronischen Steuerungen mit zugehöriger Sensorik und Aktuatorik in Kraftfahrzeugen hat in den letzten Jahren beständig zugenommen. Auch der Kraftfahrzeugsitz, der in früheren Jahren keinerlei Elektronik aufwies und lediglich mechanisch verstellbar war, ist mit dem Einzug der Elektronik in das Kraftfahrzeug mit zahlreichen elektronischen Komponenten versehen worden: So weisen beispielsweise Kraftfahrzeugsitze nach dem Stand der Technik elektrische Verstelleinrichtungen auf, die ein Verstellen der Fahrzeugsitzlehne oder des gesamten Fahrzeugsitzes per Tastendruck ermöglichen. Einhergehend mit solchen Sitzverstellvorrichtungen sind Aufnehmer zur Positionserkennung des Fahrzeugsitzes in selbigen angeordnet: Lediglich wenn die aktuelle Sitzposition bekannt ist, kann programmgesteuert eine bevorzugte Fahrzeugsitzposition per Tastendruck erreicht werden.

Weitere in oder an Fahrzeugsitzen angeordnete elektronische Komponenten sind Aufnehmer zur Sitzbelegungserkennung. Solche Aufnehmer kommen insbesondere bei Beifahrersitzen zum Einsatz: Wird mittels eines solchen Aufnehmers erkannt, dass der Beifahrersitz nicht belegt ist, wird ein Aufblasen eines Beifahrerairbags oder eines zu seiten des Beifahrersitzes angeordneten Seitenairbags verhindert.

Die beschriebenen elektrischen und elektronischen Komponenten im Fahrzeugsitz dienen im wesentlichen zwei unterschiedlichen Zwecken: Sitzverstelleinrichtungen, zugehörige Sensorik, Sitzheizung, und ähnliches dienen dem Komfort des Insassen, Aufnehmer zur Sitzbelegungserkennung oder am Fahrzeugsitz angeordnete Rückhaltemittel wie Seitenairbag oder Gurtstraffer dienen der Sicherheit des Fahrzeuginsassen.

Jeder Elektronikkomponente im Fahrzeugsitz wird üblicherweise separat Energie zugeführt. Jede einzelne Elektronikkomponente, z.B. jeder Sensor oder Aktor und insbesondere wenn die eingesetzten Sensoren und Aktoren unterschiedlichen Zwecken dienen, weist dabei ferner eine eigene zugeordnete Steuerschaltung auf. Jede Steuerschaltung z.B. in Form eines Mikrorechners enthält dabei einen eigenen Speicher, einen eigenen Mirkroprozessor, usf.. Eine einem Sensor zugeordnete Steuerschaltung führt beispielsweise eine erste Auswertung des Sensorsignals durch. Eine einem Aktor zugeordneten Steuerschaltung dient beispielsweise als Stellglied. Bei zunehmender Elektronik im Fahrzeugsitz steigt der Aufwand für Steuerschaltungen erheblich bei sich verringerndem Raumangebot im Pahrzeugsitz.

Aufgabe der Erfindung ist es deshalb, die oben beschriebenen Nachteile zu vermeiden, und insbesondere eine Steuervorrichtung mit im Fahrzeugsitz angeordneten elektrischen Komponenten zu schaffen, die eine nur geringe Bauteileanzahl aufweist.

Die Aufgabe wird gelöst durch die Merkmale der nebengeordneten Ansprüche 1 bis 5.

Vorteilhafte Weiterbildungen der Erfindung sind in den Unteransprüchen gekennzeichnet.

Die Erfindung und ihre Weiterbildungen werden anhand der Zeichnung näher erläutert. Es zeigen:
- Figur 1:: Einen Kraftfahrsitz mit einer erfindungsgemäßen Steuervorrichtung,
- Figur 2:: Ein Blockschaltbild einer erfindungsgemäßen Steuervorrichtung, und
- Figur 3:: Ein weiteres Blockschaltbild einer erfindungsgemäßen Steuervorrichtung.

Gleiche Elemente sind figurenübergreifend durch die gleichen Bezugszeichen gekennzeichnet.

Erfindungsgemäß weisen festgelegte, in einem Fahrzeugsitz angeordnete Sensoren und Aktoren eine gemeinsame Steuerschaltung auf, vorzugsweise in Form eines einzigen Mikroprozessors, sowie eine gemeinsame Energieversorgung.

In einer vorteilhaften Weiterbildung weist die aus den festgelegten Sensoren bzw. Aktoren, der gemeinsamen Steuerschaltung und der gemeinsamen Energieversorgung bestehende Steuervorrichtung ferner eine gemeinsame Schnittstelle zur Ankopplung der Steuervorrichtung an eine Datenleitung auf. Damit werden über eine einzige Datenleitung, die vorzugsweise als Datenbus ausgebildet ist, alle Daten von und zur Steuervorrichtung im Fahrzeugsitz übertragen.

Die Steuerschaltung der Steuervorrichtung wertet beispielsweise Sensorsignale des zumindest einen im Fahrzeugsitz angeordneten Sensors aus oder setzt zum Fahrzeugsitz gelieferte Signale in geeignete Stellsignale für den zumindest einen im oder am Fahrzeugsitz angebrachten Aktor um. Des weiteren kann die Steuerschältung Diagnoseroutinen zur Überprüfung der Funktionsfähigkeit von im Fahrzeugsitz angeordneten Sensoren und Aktoren übernehmen. Ggf. dient die Steuerschaltung alleine der Datenumsetzung beispielsweise von einem von einem Sensor gelieferten analogen Datenformat in ein für die Datenübertragung erforderliches digitales Datenformat.

Die erfindungsgemäße Steuervorrichtung weist durch die gemeinsame Steuerschaltung für eine Vielzahl von Steuervorgängen - unabhängig von dem Zweck der Steuervorgänge - geringen Bauraum auf, was insbesondere für den Einsatz im Fahrzeugsitz von Vorteil ist. Ferner werden gegenüber bekannten Steuervorrichtungen Bauteile eingespart. Insbesondere bei der Anbindung der Steuervorrichtung an eine Datenleitung zur seriellen Datenübertragung ist nur geringer Kabelaufwand erforderlich und die Flexibilität der Steuervorrichtung z.B. bei der Anbindung weiterer im Sitz angeordneter Sensoren/Aktoren an die Steuervorrichtung erhöht. Redundante Ausbildungen von Steuerschaltungen und Energieversorgung im Fahrzeugsitz werden vermieden. Die Steuerschaltung weist vorzugsweise einen gemeinsamen Speicher für Daten aller angebundenen elektrischen Einrichtungen auf. Vorzugsweise ist die erfindungsgemäße Steuerschaltung auf einem einzigen Schaltungsträger angeordnet.

Erfindungsgemäß weisen eine gemeinsame Steuerschaltung auf: Ein Aufnehmer zur Sitzbelegungserkennung und ein Aufnehmer zur Positionserkennung des Fahrzeugsitzes, oder ein Aufnehmer zur Sitzbelegungserkennung und eine Sitzverstellvorrichtung, oder ein Aufnehmer zur Sitzbelegungserkennung und ein Rückhaltemittel zum Insassenschutz, oder ein Rückhaltemittel zum Insassenschutz und eine Sitzverstellvorrichtung, oder ein Rückhaltemittel zum Insassenschutz und ein Aufnehmer zur Positionserkennung des Fahrzeugsitzes. Jede dieser Komponenten ist im oder am Fahrzeugsitz angeordnet, gleichfalls die Steuerschaltung. sodaß auch für eine Anbindung der Steuervorrichtung an eine Datenleitung alle Voraussetzungen erfüllt sind.

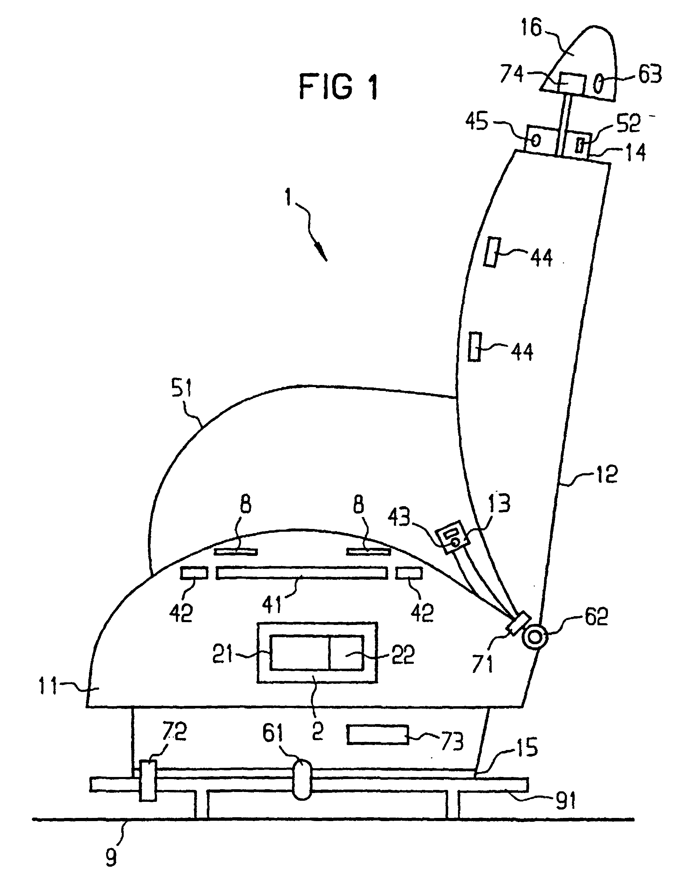

In der symbolischen Figur 1 ist ein Fahrzeugsitz 1 gezeigt, mit einem Fahrzeugsitzrumpf 11, einer Fahrzeugsitzlehne 12, einem Gurtschloß 13, einer einen Sicherheitsgurt enthaltenden Gurtbandvorrichtung 14 und mit einer Kopfstütze 16. Der Fahrzeugsitz 1 ist über eine Gleitschiene 15 auf einer mit dem Fahrzeugboden 9 verbundenen Schiene 91 verschiebbar gelagert, so daß er in etwa in Richtung der Fahrzeuglängsachse verstellbar ist. Im Fahrzeugsitzrumpf 11 ist ein Steuergerät 2 angeordnet, das eine Steuerschaltung 21 und eine Energieversorgung 22 für die Steuerschaltung 21 aufweist. Eine Ankopplung der Steuerschaltung 21 zu weiteren außerhalb des Fahrzeugsitzes 1 angeordneten Steuerschaltungen, Aktoren oder Sensoren, sowie die Zuleitung der Energieversorgung 22 ist aus Gründen der Übersichtlichkeit nicht eingezeichnet.

Der Fahrzeugsitz 1 gemäß Figur 1 enthält an der Sicherheitselektronik zuzurechnenden Sensoreinrichtungen insbesondere Aufnehmer 4 zur Sitzbelegungserkennung, wie einem im Fahrzeugsitzrumpf 11 angeordneten Gewichtssensor 41, eine im Fahrzeugsitzrumpf 11 angeordnete Einrichtung 42 zur Kindersitzerkennung, einen Gurtschloßsensor 43, kapazitive Sensoren 44 in der Fahrzeugsitzlehne 12, sowie einen Sensor 45 zum Erfassen abgerollter Gurtlänge an der Gurtbandvorrichtung 14. An der Komfortelektronik zuzurechnenden Sensoreinrichtungen enthält der Fahrzeugsitz insbesondere Aufnehmer 6 zur Positionserkennung des Fahrzeugsitzes 1 wie z.B. einen Aufnehmer 61 zur Positionserkennung des Fahrzeugsitzes 1 entlang der Gleitschiene, einen Aufnehmer 62 für den Neigungswinkel der Fahrzeugsitzlehne 13 sowie einen Aufnehmer 63 für die Position der Kopfstütze 16. Der Fahrzeugsitz 1 enthält ferner Aktoreinrichtungen der Sicherheitselektronik, wie Rückhaltemittel 5 zum Insassenschutz, insbesondere einen Airbag 51 - dieser ist schematisch im aufgeblasenen Zustand eingezeichnete-oder einen Gurtstraffer 52. Des weiteren sind Komfortelektronikaktoren einer Sitzverstellvorrichtung 7 vorgesehen, wie beispielsweise eine Lehnenverstellvorrichtung 71, eine Positionsverstellvorrichtung 72, eine Höhenverstellvorrichtung 73 und eine Kopfstützenverstellvorrichtung 74. Ferner ist eine Sitzheizung 8 im Fahrzeugsitzrumpf 11 angeordnet.

Alle Sensoreinrichtungen 4 und 6 sowie alle Aktoreinrichtungen 5 und 7 sind über nicht eingezeichnete elektrisch leitende Verbindungen mit der Steuerschaltung 21 verbunden.

Die Sensoreinrichtungen 4 und 6 und die Aktoreinrichtungen 5 und 7 sind für sich alle bekannt. Der Gewichtssensor 41 zeigt an, welches Gewicht auf den Fahrzeugsitzrumpf 11 einwirkt. Ein Gewichtssensor kann natürlich auch in der Fahrzeugsitzlehne zur Aufnahme einer auf die Lehne einwirkenden Kraft angeordnet sein. Die Einrichtung 42 zur Kindersitzerkennung gibt Aufschluß darüber, ob ein Kindersitz auf dem Fahrzeugsitz 1 angeordnet ist und ggf. wie dieser Kindersitz orientiert ist. Der Gurtschloßsensor 43 zeigt an, ob ein Sicherheitsgurt im Gurtschloß 13 verrastet ist oder nicht. Die kapazitiven Sensoren 44 stellen fest ob ein menschlicher Körper an die Fahrzeugsitzlehne 12 gelehnt ist. Der Sensor 45 zum Erfassen abgerollter Gurtlänge gibt Aufschluß über den Umfang der angegurteten Person bzw. des angegurteten Gegenstands. Den Aufnehmern 4 zur Sitzbelegungserkennung können unterschiedliche physikalische Meßprinzipien zugrunde liegen.

Die Aufnehmer 6 zur Positionserkennung des Fahrzeugsitzes liefern einerseits Informationen für die Komfortelektronik und ermöglichen damit programmgesteuerte Sitzeinstellungen. Zum anderen können die Signale der Aufnehmer 6 zur Positionserkennung auch zur Ermittlung der Insassenposition herangezogen werden.

Am Fahrzeugsitz 1 angeordnete Rückhaltemittel 5 sind derzeit insbesondere der Seitenairbag 51 und der Gurtstraffer 52. Diese Rückhaltemittel können datenwortgesteuert betätigt werden. Mit den Einrichtungen der Sitzverstellvorrichtung 7 können die Fahrzeugsitzlehne 12 in ihrem Neigungswinkel, der gesamte Fahrzeugsitz 1 in seiner Position, der Fahrzeugsitz in seiner Höhe, sowie die Kopfstützen in ihrer Lage verstellt werden.

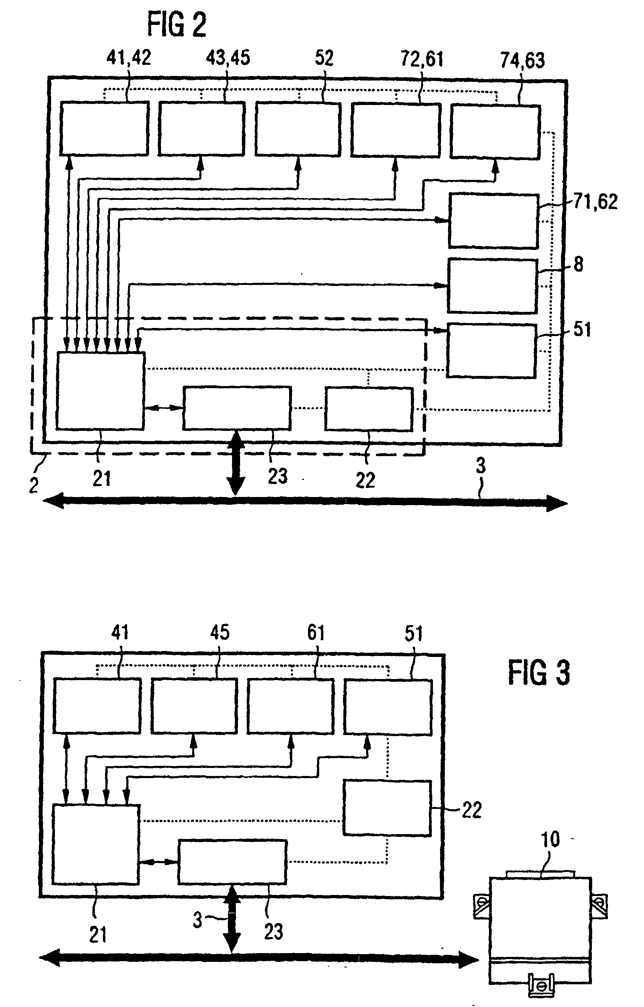

Figur 2 zeigt ein Blockschaltbild einer erfindungsgemäßen Steuervorrichtung. Dabei ist die Steuerschaltung 21, die Energieversorgung 22 und die Schnittstelle 23 zu einer Datenleitung 3 in einem gemeinsamen Steuergerät 2 mit entsprechendem Gehäuse bzw. Schutzmittel vor Umwelteinflüssen angeordnet. An das Steuergerät 2 sind angeschlossen ein Gewichtssensor 41, eine Einrichtung 42 zur Kindersitzerkennung, ein Gurtschloßsensor 43, einen Sensor zum Erfassen abgerollter Gurtlänge 45, ein Gurtstraffer 52, ein Airbag 51, eine Sitzheizung 8, eine Lehnenverstellvorrichtung 71, eine Positionsverstellvorrichtung 72, eine Kopfstützenverstellvorrichtung 74, sowie ein Aufnehmer 61 für die Fahrzeugsitzposition entlang der Gleitschiene, ein Aufnehmer 62 für den Lehnenneigungswinkel und ein Aufnehmer 63 für die Kopfstützenposition.

Weist eine erfindungsgemäße Steuervorrichtung lediglich Komponenten zum Insassenschutz auf, zum einen zumindest einen Aufnehmer zur Sitzbelegungserkennung 4 zum anderen zumindest ein Rückhaltemittel 5, so sind die in der gemeinsamen Steuerschaltung 21 ablaufenden Steuervorgänge im wesentlichen unabhängig voneinander. Der Aufnehmer 4 zur Sitzbelegungserkennung liefert in der Regel seine Signale an ein außerhalb des Fahrzeugsitzes angeordnetes Steuergerät für den Insassenschutz, das wiederum mit einem Beschleunigungsaufnehmer oder sonstigen aufprallerkennende Einrichtungen elektrisch verbunden ist. Gewöhnlich werden von diesem Steuergerät Zündbefehle an einzelne, angeschlossene Rückhaltemittel, so auch an den Seitenairbag 51 ausgesendet. Vorzugsweise wird durch die Steuerschaltung veranlaßt, dass das am Fahrzeugsitz angeordnete Rückhaltemittel 5 in Abhängigkeit der durch die Steuerschaltung 21 ausgewerteten Signale des oder der Aufnehmer 4 zur Sitzbelegungserkennung freigeschaltet bzw. stummgeschaltet wird. Dazu wird von der Steuerschaltung 21 ein entsprechendes Steuersignal an das Rückhaltemittel 5 geliefert.

Bei einer weiteren erfindungsgemäßen Steuervorrichtung mit einem Aufnehmer zur Sitzbelegungserkennung 4 und einem Aufnehmer zur Positionserkennung 6 kann in der gemeinsamen Steuerschaltung 21 aus den Signalen beider Aufnehmer 4 und 6 die Insassenposition berechnet und ggf klassifiziert werden. Beispielsweise gibt die Steuerschaltung 21 über ihre Schnittstelle 23 dann bereits Steuersignale mit detaillierten Informationen über die Insassenposition und/oder die Art eines auf dem Fahrzeugsitz angeordneten Gegenstandes wie zum Beispiel eines Kindersitzes.

Sind in einer weiteren erfindungsgemäßen Steuervorrichtung ein Aufnehmer zur Sitzbelegungserkennung 4 und eine Sitzverstellvorrichtung 7 gemeinsam mit einer gemeinsamen Steuerschaltung 21 im Fahrzeugsitz angeordnet, so kann die Steuerschaltung 21 zum einen die Sitzverstellvorrichtung 7 steuern und zum anderen Signale des Aufnehmers zur Sitzbelegungserkennung 4 verarbeiten oder weiterleiten. Vorzugsweise kann aber auch abhängig vom von dem Aufnehmer zur Sitzbelegungserkennung 4 gelieferten Signal die Sitzverstellvorrichtung 7 mit einem Steuersignal der Steuerschaltung 21 derart beeinflusst werden, dass, wird beispielsweise eine für den Insassen gefährliche Sitzposition erkannt, der Fahrzeugsitz über die Sitzverstellvorrichtung 7 derart in seiner Position verändert wird, daß der Insasse daraufhin eine unbedenkliche Position einnimmt. Ist beispielsweise der Insasse weit nach vorne gelehnt, so kann veranlaßt durch die Steuerschaltung 21 die Positionsverstellvorrichtung 72 des Fahrzeugsitzes 1 derart betätigt werden, daß der Fahrzeugsitz in eine rückwärtige Position bewegt wird und damit der Insasse nicht mehr unmittelbar vor einem Airbag positioniert ist.

Eine weitere erfindungsgemäße Steuervorrichtung weist ein Rückhaltemittel 5 zum Insassenschutz und einen Aufnehmer zur Positionserkennung 6 des Fahrzeugsitzes auf. Bei dieser Steuervorrichtung kann in Abhängigkeit von der ggf ausgewerteten Fahrzeugsitzposition durch die Steuerschaltung 21 veranlaßt das Rückhaltemittel 5 gesperrt oder freigegeben werden.

Eine auf die Insassenerkennung ausgerichtete Steuervorrichtung weist in einer Minimalkonfiguration vorzugsweise folgende Komponenten auf: eine gemeinsame Steuerschaltung mit zugehöriger Energieversorgung sowie eine mit der Steuerschaltung verbundene Gewichtserkennung und eine Positionserkennung des Fahrzeugsitzes. Die beiden Größen Gewicht des Insassen und Position des Fahrzeugsitzes sind für die Berechnung der Insassenposition unverzichtbar. Wird die Steuervorrichtung erweitert, so vorzugsweise mit einer Kindersitzerkennung. Soll die Insassenposition genauer bestimmt werden, ist vorzugsweise ein Sensor zum Erfassen der abgerollten Gurtlänge anzuordnen und mit der gemeinsamen Steuerschaltung elektrisch zu verbinden. Figur 3 zeigt eine solche vorteilhafte Steuervorrichtung, bei der zusätzlich noch ein Seitenairbag 10 im Fahrzeugsitz angeordnet ist.

Mit dem Abspeichern z.B. von Werten bezüglich der abgerollten Gurtlänge kann die Dynamik der abgerollten Gurtlänge verfolgt werden und somit ein korpulenter Insasse - bei dem sich eine zeitlich etwa gleichbleibende Gurtlänge einstellt - von einem nach vorne gebeugten Insassen unterschieden werden - bei dem sich die abgerollte Gurtlänge zeitlich sicher erheblich ändert.

## Patentansprüche

1. Fahrzeugsitz mit einer Steuervorrichtung, die einen Aufnehmer zur Sitzbelegungserkennung (4), einen Aufnehmer zur Positionserkennung (6) des Fahrzeugsitzes (1), eine im Fahrzeugsitz angeordnete gemeinsame Steuerschaltung (21) und eine Energieversorgung (22) für die Steuerschaltung (21) aufweist, und bei der der Aufnehmer zur Sitzbelegungserkennung (4) und der Aufnehmer zur Positionserkennung (6) des Fahrzeugsitzes (1) elektrisch leitend mit der Steuerschaltung (21) verbunden sind.

2. Fahrzeugsitz mit einer Steuervorrichtung, die einen Aufnehmer zur Sitzbelegungserkennung (4), eine Sitzverstellvorrichtung (7), eine im Fahrzeugsitz angeordnete gemeinsame Steuerschaltung (21) und eine Energieversorgung (22) für die Steuerschaltung (21) aufweist, und bei der der Aufnehmer zur Sitzbelegungserkennung (4) und die Sitzverstellvorrichtung (7) elektrisch leitend mit der Steuerschaltung (21) verbunden sind.

3. Fahrzeugsitz mit einer Steuervorrichtung, die einen Aufnehmer zur Sitzbelegungserkennung (4), ein Rückhaltemittel (5) zum Insassenschutz, eine im Fahrzeugsitz angeordnete gemeinsame Steuerschaltung (21) und eine Energieversorgung (22) für die Steuerschaltung (21) aufweist, und bei der der Aufnehmer zur Sitzbelegungserkennung (4) und das Rückhaltemittel (5) elektrisch leitend mit der Steuerschaltung (21) verbunden sind.

4. Fahrzeugsitz mit einer Steuervorrichtung, die ein Rückhaltemittel (5) zum Insassenschutz, eine Sitzverstellvorrichtung (7), eine im Fahrzeugsitz angeordnete gemeinsame Steuerschaltung (21) und eine Energieversorgung (22) für die Steuerschaltung (21) aufweist, und bei der das Rückhaltemittel (5) und die Sitzverstellvorrichtung (7) elektrisch leitend mit der Steuerschaltung (21) verbunden sind.

5. Fahrzeugsitz mit einer Steuervorrichtung, die ein Rückhaltemittel (5) zum Insassenschutz, einen Aufnehmer zur Positionserkennung (6) des Fahrzeugsitzes (1), eine im Fahrzeugsitz angeordnete gemeinsame Steuerschaltung (21) und eine Energieversorgung (22) für die Steuerschaltung (21) aufweist, und bei der das Rückhaltemittel (5) und der Aufnehmer zur Positionserkennung (6) des Fahrzeugsitzes (1) elektrisch leitend mit der Steuerschaltung (21) verbunden sind.

6. Fahrzeugsitz nach einem der Ansprüche 1 bis 3, bei dem der Aufnehmer zur Sitzbelegungserkennung (4) einen Gewichtssensor (41) aufweist.

7. Fahrzeugsitz nach einem der Ansprüche 1 bis 3 oder 6, bei dem der Aufnehmer zur Sitzbelegungserkennung (4) eine Einrichtung zur Kindersitzerkennung (42) aufweist.

8. Fahrzeugsitz nach einem der Ansprüche 1 bis 3 oder 6 oder 7, bei dem der Aufnehmer zur Sitzbelegungserkennung (4) einen Gurtschlosssensor (43) für ein am Fahrzeugsitz (1) angeordnetes Gurtschloss (13) aufweist.

9. Fahrzeugsitz nach einem der Ansprüche 1 bis 3 oder 6 bis 8, bei dem der Aufnehmer zur Sitzbelegungserkennung (4) einen Sensor zum Erfassen der abgerollten Gurtlänge (45) eines am Fahrzeugsitz (1) angeordneten Sicherheitsgurtes aufweist.

10. Fahrzeugsitz nach Anspruch 1 oder 5, bei dem der Aufnehmer zur Positionserkennung (6) des Fahrzeugsitzes (1) einen Aufnehmer (61) zum Erkennen der Position des Fahrzeugsitzes (1) entlang seiner Gleitschiene aufweist.

11. Fahrzeugsitz nach Anspruch 1 oder 5 oder 10, bei dem der Aufnehmer zur Positionserkennung (6) des Fahrzeugsitzes (1) einen Aufnehmer (62) zum Erkennen des Neigungswinkels der Fahrzeugsitzlehne (12) aufweist.

12. Fahrzeugsitz nach einem der Ansprüche 3 bis 5, bei dem das Rückhaltemittel (5) einen am Fahrzeugsitz (1) angeordneten Airbag (51) aufweist.

13. Fahrzeugsitz nach Anspruch 1 bei dem die Steuervorrichtung eine Schnittstelle (23) zum seriellen Übertragen von Daten auf einer Datenleitung (3) aufweist.

14. Fahrzeugsitz nach Anspruch 1, bei dem die Steuerschaltung (21) als Mikroprozessor ausgebildet ist.

## Claims

1. Vehicle seat with a control device, which has a seat occupancy detection sensor (4), a vehicle seat (1) position detection sensor (6), a shared control circuit (21) located in the vehicle seat and an energy supply (22) for the control circuit (21), and in which the seat occupancy detection sensor (4) and the vehicle seat (1) position detection sensor (6) are connected in an electrically conductive fashion to the control circuit (21).

2. Vehicle seat with a control device, which has a seat occupancy detection sensor (4), a seat adjustment device (7), a shared control circuit (21) located in the vehicle seat and an energy supply (22) for the control circuit (21), and in which the seat occupancy detection sensor (4) and the seat adjustment device (7) are connected in an electrically conductive fashion to the control circuit (21).

3. Vehicle seat with a control device, which has a seat occupancy detection sensor (4), an occupant protection restraint (5), a shared control circuit (21) located in the vehicle seat and an energy supply (22) for the control circuit (21), and in which the seat occupancy detection sensor (4) and the restraint (5) are connected in an electrically conductive fashion to the control circuit (21).

4. Vehicle seat with a control device, which has an occupant protection restraint (5), a seat adjustment device (7), a shared control circuit (21) located in the vehicle seat and an energy supply (22) for the control circuit (21), and in which the restraint (5) and the seat adjustment device (7) are connected in an electrically conductive fashion to the control circuit (21).

5. Vehicle seat with a control device, which has an occupant protection restraint (5), a vehicle seat (1) position detection sensor (6), a shared control circuit (21) located in the vehicle seat and an energy supply (22) for the control circuit (21), and in which the restraint (5) and the vehicle seat (1) position detection sensor (6) are connected in an electrically conductive fashion to the control circuit (21).

6. Vehicle seat according to one of Claims 1 to 3, in which the seat occupancy detection sensor (4) has a weight sensor (41).

7. Vehicle seat according to one of Claims 1 to 3 or 6, in which the seat occupancy detection sensor (4) has a device to detect a child seat (42).

8. Vehicle seat according to one of Claims 1 to 3 or 6 or 7, in which the seat occupancy detection sensor (4) has a seatbelt fastener sensor (43) for a seatbelt fastener (13) located on the vehicle seat (1).

9. Vehicle seat according to one of Claims 1 to 3 or 6 to 8, in which the seat occupancy detection sensor (4) has a sensor to detect the unwound length of belt (45) of a safety belt located on the vehicle seat (1).

10. Vehicle seat according to Claim 1 or 5, in which the vehicle seat (1) position detection sensor (6) has a sensor (61) to detect the position of the vehicle seat (1) along its runner.

11. Vehicle seat according to Claim 1 or 5 or 10, in which the vehicle seat (1) position detection sensor (6) has a sensor (62) to detect the angle of inclination of the vehicle seat backrest (12).

12. Vehicle seat according to one of Claims 3 to 5, in which the restraint (5) has an airbag (51) located on the vehicle seat (1).

13. Vehicle according to Claim 1, in which the control device has an interface (23) for the serial transfer of data on a data line (3).

14. Vehicle seat according to Claim 1, in which the control circuit (21) is in the form of a microprocessor.

## Revendications

1. Siège de conducteur comportant un dispositif de commande, qui présente un détecteur (4) pour détecter l'occupation du siège, un détecteur (6) pour évaluer la position du siège du conducteur (1), un circuit de commande (21) commun disposé dans le siège du conducteur, et une alimentation en énergie (22) pour le circuit de commande (21), le détecteur (4) pour détecter l'occupation du siège et le détecteur (6) pour évaluer la position du siège du conducteur (1) étant reliés par conducteur électrique au circuit de commande (21).

2. Siège de conducteur comportant un dispositif de commande, qui présente un détecteur (4) pour détecter l'occupation du siège, un dispositif de positionnement du siège (7), un circuit de commande (21) commun disposé dans le siège du conducteur, et une alimentation en énergie (22) pour le circuit de commande (21), le détecteur (4) pour détecter l'occupation du siège et le dispositif de positionnement du siège (7) étant reliés par conducteur électrique au circuit de commande (21).

3. Siège de conducteur comportant un dispositif de commande, qui présente un détecteur (4) pour détecter l'occupation du siège, un moyen de retenue (5) pour la protection de l'occupant du siège, un circuit de commande (21) commun disposé dans le siège du conducteur, et une alimentation en énergie (22) pour le circuit de commande (21), le détecteur (4) pour détecter l'occupation du siège et le moyen de retenue (5) étant reliés par conducteur électrique au circuit de commande (21).

4. Siège de conducteur comportant un dispositif de commande, qui présente un moyen de retenue (5) pour la protection de l'occupant du siège, un dispositif de positionnement du siège (7), un circuit de commande (21) commun disposé dans le siège du conducteur, et une alimentation en énergie (22) pour le circuit de commande (21), le moyen de retenue (5) et le dispositif de positionnement du siège (7) étant reliés par conducteur électrique au circuit de commande (21).

5. Siège de conducteur comportant un dispositif de commande, qui présente un moyen de retenue (5) pour la protection de l'occupant du siège, un détecteur (6) pour évaluer la position du siège du conducteur (1), un circuit de commande (21) commun disposé dans le siège du conducteur, et une alimentation en énergie (22) pour le circuit de commande (21), le moyen de retenue (5) et le détecteur (6) pour évaluer la position du siège du conducteur (1) étant reliés par conducteur électrique au circuit de commande (21).

6. Siège de conducteur suivant l'une des revendications 1 à 3, pour lequel le détecteur (4) pour détecter l'occupation du siège présente un détecteur de poids (41).

7. Siège de conducteur suivant l'une des revendications 1 à 3 ou 6, dans lequel le détecteur (4) pour détecter l'occupation du siège présente un dispositif (42) pour détecter un siège pour enfant.

8. Siège de conducteur suivant l'une des revendications 1 à 3 ou 6 ou 7, dans lequel le détecteur (4) pour détecter l'occupation du siège présente un détecteur de bouclage de ceinture (43) destiné à une boucle de ceinture (13) disposée contre le siège de véhicule automobile (1).

9. Siège de conducteur suivant l'une des revendications 1 à 3 ou 6 à 8, dans lequel le détecteur (4) pour détecter l'occupation du siège présente un détecteur pour relever la longueur de ceinture déroulée (45) d'une ceinture de sécurité disposée sur le siège du véhicule automobile (1).

10. Siège de conducteur suivant la revendication 1 ou 5, dans lequel le détecteur d'évaluation (6) de la position du siège du véhicule automobile (1) présente un détecteur (61) d'évaluation de la position du siège du véhicule automobile (1) le long de son rail de glissement.

11. Siège de conducteur suivant la revendication 1 ou 5 ou 10, dans lequel le détecteur d'évaluation (6) de la position du siège du véhicule automobile (1) présente un détecteur (62) de mesure de l'angle d'inclinaison du dossier (12) du siège du véhicule.

12. Siège de conducteur suivant l'une des revendications 3 à 5, dans lequel le moyen de retenue (5) présente un coussin gonflable (51) disposé contre le siège du véhicule automobile.

13. Siège de conducteur suivant la revendication 1, dans lequel le circuit de commande présente un interface (23) pour la transmission en série de données à un conducteur de données (3).

14. Siège de conducteur suivant la revendication 1, dans lequel le circuit de commande (21) est réalisé sous la forme d'un microprocesseur.
